# EUROPÄISCHE PATENTANMELDUNG

(11) **EP 4 209 295 A1**
(43) Veröffentlichungstag der Anmeldung: **12.07.2023**
(21) Anmeldenummer: 23150395.4
(22) Anmeldetag: 05.01.2023
(51) Int. Cl.: B23B 27/10, B23B 29/24, B23B 27/14, B23B 29/08

(54) **DREHWERKZEUG ZUR SPANENDEN BEARBEITUNG VON UNRUNDEN PROFILEN**

(30) Priorität: 06.01.2022 DE 202022000109 U
(71) Anmelder: NSH Technology GmbH, 09117 Chemnitz (DE)
(72) Erfinder: Halle, Moritz, 09127 Chemnitz (DE)
(74) Vertreter: Brinkmann & Partner

(57) **Zusammenfassung**

Die Erfindung betrifft ein Drehwerkzeug für eine Werkzeugmaschine zur spanenden Innen- und Außenbearbeitung von unrunden Profilen, wobei das Drehwerkzeug ein Grundwerkzeug (3) aufweist, das bezogen auf eine Werkzeugrotationsachse (5) an einem stirnseitigen Endabschnitt eine Werkzeugschnittstelle (9) zur Aufnahme in eine Werkzeugspindel einer Werkzeugmaschine und am anderen stirnseitigen Endabschnitt eine Trennstelle (6) zu mindestens einem am Grundwerkzeug (3) befestigbaren Drehwerkzeugaufsatz (2) aufweist, wobei der mindestens eine Drehwerkzeugaufsatz (2) bezogen auf die Werkzeugrotationsachse (5) auf dem Grundwerkzeug (3) radial verlagerbar und feststellbar ist und einen Abschnitt zur Aufnahme einer Wendeschneidplatte (12) aufweist, dadurch gekennzeichnet, dass auf dem mindestens einen Drehwerkzeugaufsatz (2) benachbart zur Aufnahme für die Wendeschneidplatte (12) ein Austrittselement (1) für einen Betriebshilfsstoff angeordnet ist und dass das Drehwerkzeug ein Bohrungssystem aufweist, das ausgestaltet ist, um den für den Bearbeitungsprozess notwendigen Betriebshilfsstoff als gasförmiges Medium oder als Emulsion zu einer am Austrittselement (1) ausgebildeten Öffnung zum Austritt des Betriebshilfsstoffes zu leiten, wobei das Bohrungssystem ausgehend vom Übergangsbereich der Werkzeugschnittstelle (9) zum Grundwerkzeug (3) bis zum Übergangsbereich des Grundwerkzeuges (3) zur Trennstelle (6) im Grundwerkzeug (3) und ausgehend von der Trennstelle (6) zum Austrittselement (1) im Drehwerkzeugaufsatz (2) verläuft und wobei der Betriebshilfsstoff über eine in Richtung der Werkzeugrotationsachse (5) in der Werkzeugschnittstelle (9) angeordnete Bohrung zentrisch (8) und/oder über die Mantelfläche (7) der Werkzeugschnittstelle (9) in das Bohrungssystem zuführbar ist.

## Beschreibung

Die Erfindung betrifft ein Drehwerkzeug für eine Werkzeugmaschine zur spanenden Innen- und Außenbearbeitung von unrunden Profilen, wobei das Drehwerkzeug ein Grundwerkzeug aufweist, das bezogen auf eine Werkzeugrotationsachse an einem stirnseitigen Endabschnitt eine Werkzeugschnittstelle zur Aufnahme in eine Werkzeugspindel einer Werkzeugmaschine und am anderen stirnseitigen Endabschnitt eine Trennstelle zu mindestens einem am Grundwerkzeug befestigbaren Drehwerkzeugaufsatz aufweist, wobei der mindestens eine Drehwerkzeugaufsatz bezogen auf die Werkzeugrotationsachse auf dem Grundwerkzeug radial verlagerbar und feststellbar ist und einen Abschnitt zur Aufnahme einer Wendeschneidplatte aufweist.

Werkzeuge zur spanenden Drehbearbeitung von Werkstücken sind in verschiedenartigen Ausführungen bekannt. Der Hauptanwendungsbereich für ein Drehwerkzeug liegt in den meisten Fällen bei einem nichtrotierenden Werkzeug, welches mit definiertem Vorschub entlang einer Werkzeugbahn über ein rotierendes Werkstück oder im hohlen Innenraum eines rotierenden Werkstückes geführt wird. Das Werkstück gibt dabei die für den Prozess notwendige Schnittgeschwindigkeit vor. In diesem Hauptanwendungsbereich ist das Drehwerkzeug überwiegend einteilig ausgeführt und kann nur über die Maschinenachsen der Werkzeugmaschine verstellt werden. Weiterhin sind für Drehbearbeitungen auch mehrteilig ausgeführte Werkzeuge bekannt.

So wird in EP 1 166 929 B1 ein Kombinationswerkzeug zur lösbaren Montage beschrieben, welches einen Grundhalter, ein rotierendes Werkzeug mit gleicher Rotationsachse wie der Grundhalter sowie ein Drehwerkzeug aufweist. Dabei ist das Drehwerkzeug am äußeren Umfang vorgesehen und das rotierende Werkzeug im Rotationszentrum des Grundhalters. Dieses Kombinationswerkzeug kann wahlweise im Stillstand für eine Drehbearbeitung oder bei Rotation für eine Rotationsbearbeitung genutzt werden. Der Drehhalter ist dabei über eine Schraubenverbindung befestigt.

Aus EP 0 565 907 B1 ist ein Werkzeug bekannt, welches austauschbare Schneidkörper aufweist. Diese Schneidkörper sind in einer schrägen Aufnahmebohrung im Grundhalter über Befestigungselemente fixiert. Das Werkzeug ist zur Bearbeitung von kleinen Bohrungen geeignet und dient vorrangig der Einbringung von Einstichen in derartige Bohrungen. Der Grundhalter weist zudem eine zentrale Bohrung auf, mit der eine Kühlmittelzufuhr gewährleistet ist.

WO 2006/ 136 338 A1 beschreibt eine Schnittstelle eines Werkzeugsystems, die in Form einer Hirth-Verzahnung ausgeführt ist. Mindestens zwei Teile eines Werkzeuges sind über die beschriebene Schnittstelle und über eine zentrale Befestigungsbohrung miteinander kraft- und formschlüssig verbunden. Zudem ist das Werkzeug über diese Schnittstelle mit weiteren Werkzeugkomponenten kombinierbar.

Die DE 195 01 857 C1 betrifft ein Zirkulationsfräswerkzeug. Dieses verfügt über einen als Grundwerkzeug zu bezeichnenden Werkzeugspindelkörper einerseits sowie über einen daran angeordneten Klemmhalter andererseits. Stirneitig ist der Klemmhalter mit einer Schneidplatte ausgerüstet.

Die EP 3 141 325 A1 offenbart ein Bohrwerkzeug, das über einen Grundkörper einerseits und eine Kassette andererseits verfügt, wobei die Kassette eine Schneidplatte trägt. Die Kassette samt Schneidplatte ist in radialer Richtung verstellbar am Werkzeuggrundkörper angeordnet, wobei eine Positionierung der Kassette in Relation zum Werkzeuggrundkörper mittels einer Feststellschraube erfolgt.

Aufgabe der Erfindung ist es, ein mehrteilig ausgeführtes Werkzeug für Drehbearbeitungen zu schaffen, bei dem in jedem Betriebszustand eine funktionell sichere Zuführung von Betriebshilfsstoffen (Kühlmedium oder Schmiermedium) in den Werkzeugeingriffsbereich möglich ist.

Diese Aufgabe wird gelöst, indem auf mindestens einen Drehwerkzeugaufsatz benachbart zur Aufnahme für die Wendeschneidplatte ein Austrittselement für einen Betriebshilfsstoff angeordnet ist und indem das Drehwerkzeug ein Bohrungssystem aufweist, das ausgestaltet ist, um den für den Bearbeitungsprozess notwendigen Betriebshilfsstoff als gasförmiges Medium oder als Emulsion zu einer am Austrittselement ausgebildeten Öffnung zum Austritt des Betriebshilfsstoffes zu leiten, wobei das Bohrungssystem ausgehend vom Übergangsbereich der Werkzeugschnittstelle zum Grundwerkzeug bis zum Übergangsbereich des Grundwerkzeuges zur Trennstelle im Grundwerkzeug und ausgehend von der Trennstelle zum Austrittselement im Drehwerkzeugaufsatz verläuft und wobei der Betriebshilfsstoff über eine in Richtung der Werkzeugrotationsachse in der Werkzeugschnittstelle zentrisch angeordnete Bohrung und/oder über die Mantelfläche der Werkzeugschnittstelle in das Bohrungssystem zuführbar ist.

Eine Ausgestaltung schlägt vor, dass das Austrittselement am Drehwerkzeugaufsatz derart verstellbar ist, dass die am Austrittselement ausgebildete Öffnung zum Austritt des Betriebshilfsstoffes auf den Werkzeugeingriffspunkt an der Schneidenspitze der Wendeschneidplatte ausrichtbar ist.

Eine weitere Ausgestaltung schlägt vor, dass das Bohrungssystem an der Trennstelle zwischen dem Grundwerkzeug und dem Drehwerkzeugaufsatz derart ausgestaltet ist, dass auch bei einer radialen Verlagerung des Drehwerkzeugaufsatzes auf dem Grundwerkzeug der Betriebshilfsstoff abgedichtet geführt ist. Dies wird vorzugsweise erreicht, indem das Bohrungssystem an der Trennstelle im Grundwerkzeug als eine Nut ausgeführt ist.

Eine weitere Ausgestaltung schlägt vor, dass die Arretierung des Drehwerkzeugaufsatzes auf dem Grundwerkzeug als eine selbsthemmende Verbindung ausgestaltet ist. Dies wird vorzugsweise erreicht, indem die selbsthemmende Verbindung als Schraubenverbindung ausgeführt ist.

Eine weitere Ausgestaltung schlägt vor, dass am Grundwerkzeug gegenüberliegend vom Drehwerkzeugaufsatz ein Ausgleichsgewicht zur Kompensation der Unwucht angeordnet ist. Dabei ist vorgesehen, dass das Ausgleichsgewicht bezogen auf die Werkzeugrotationsachse auf dem Grundwerkzeug in radialer Richtung verlagert werden kann.

Eine weitere Ausgestaltung schlägt vor, dass am Grundwerkzeug mindestens zwei Drehwerkzeugaufsätze angeordnet sind.

Die Grundidee der erfindungsgemäßen Lösung besteht demzufolge darin, dass ein Bohrungssystem in das Grundwerkzeug eingebracht wird, welches an der Trennstelle unterbrochen wird und über ein geeignetes Zuführungssystem fortgesetzt wird und somit einen Betriebshilfsstoff (vorzugsweise ein Kühlmedium, so dass nachfolgend primär nur diese Art von Betriebshilfsstoff benannt wird) in den Drehwerkzeugaufsatz, auch bei radialer Verstellung in Verstellrichtung desselben, übergibt. Durch das weiterführende Bohrungssystem wird das Kühlmedium durch den Drehwerkzeugaufsatz geführt, bis es an einer Bohrung des Drehwerkzeugaufsatzes in ein Austrittselement mit einer Öffnung übergeben wird. Dabei ist es vorteilhaft, dass das Austrittselement in seiner Umfangsrichtung beweglich ist, so dass die Öffnung des Austrittselementes in Richtung der Spitze der eingesetzten Wendeschneidplatte ausgerichtet werden kann.

Somit wird ein mehrteiliges und variables, im Bearbeitungsdurchmesser verstellbares Drehwerkzeug für die spanende Innen- und Außenbearbeitung von unrunden Profilen verfügbar. Dieses Werkzeug umfasst ein Grundwerkzeug mit einer Werkzeugschnittstelle zur Aufnahme in eine Werkzeugspindel und mit einem Bohrungssystem zur Durchleitung eines Kühlmediums, einen Drehwerkzeugaufsatz mit einem Plattensitz zur Aufnahme einer Wendeschneidplatte und mit einem Bohrungssystem mit Austrittselement zur Durchführung und verstellbar gerichtetem Austreten eines Kühlmediums. Das Kühlmedium wird dabei vorzugsweise in Richtung der Schneidenspitze ausgerichtet und kann aus einem gasförmigen Medium oder aus einer Emulsion bestehen. Das Kühlmedium wird zwischen den einzelnen Komponenten des Werkzeuges über eine geeignet dichtende Schnittstelle übergeben, die so ausgebildet ist, dass diese auch bei einer Verstellung des Drehwerkzeugaufsatzes zur Bearbeitung anderer Durchmesser ihre Funktion erfüllt. Folglich ist mit diesem mehrteilig ausgeführten Werkzeug für Drehbearbeitungen in jedem Betriebszustand eine funktionell sichere Zuführung von Betriebshilfsstoffen in den Werkzeugeingriffsbereich möglich.

Gemäß einem weiteren Merkmal der Erfindung ist vorgesehen, dass das Grundwerkzeug über einen Grundkörper und eine Platte verfügt. Dabei stellt der Grundkörper die Werkzeugschnittstelle des Grundwerkzeugs bereit. Es ist mithin vorgesehen, dass das Grundwerkzeug einen die Werkzeugschnittstelle bereitstellenden Grundkörper einerseits und eine Platte andererseits aufweist.

Die konstruktive Unterteilung des Grundwerkzeugs in Grundkörper und Platte hat insbesondere den Vorteil, dass je nach geometrischer Ausgestaltung des mit dem Drehwerkzeugaufsatz auszubildenden Profils eine entsprechende Platte wahlweise eingesetzt werden kann. Die Platte kann insofern auch als Adapterplatte bezeichnet werden, da sie in Abhängigkeit der Geometrie des auszubildenden Profils für eine entsprechende Ausrichtung des im endmontierten Zustand von der Platte getragenen Drehwerkzeugaufsatzes sorgt.

Zur Ausbildung von insbesondere polygonalen Werkstückformen ist die von einem Drehwerkzeugaufsatz getragene Schneidplatte in ihrer Winkellage entsprechend auszurichten. Dabei liegt die Schneidkante der Schneidplatte stets fluchtend in Richtung zur Drehachse des Drehwerkzeugaufsatzes. Für den Fall, dass das Drehwerkzeug über zwei Drehwerkzeugaufsätze verfügt, sind die Schneidkanten beider Schneidplatten entsprechend auszurichten.

Zwecks Ausrichtung einer Schneidplatte ist der Drehwerkzeugaufsatz quer zur Platte, das heißt tangential zur Drehachse des Drehwerkzeugs in Relation zur Platte zu positionieren. Damit je nach Position des Drehwerkzeugaufsatzes in Relation zur Platte noch eine Versorgung des drehwerkzeugaufsatzseitigen Bohrsystems mit Hilfsstoff erfolgen kann, sind je nach gewünschter Winkelstellung der Schneidplatte hinsichtlich des Bohrsystems entsprechend ausgebildete Platten zu verwenden. Je nach auszubildendem Polygonal sind deshalb entsprechend ausgebildete Platten wahlweise mit dem Grundkörper zur Ausbildung des Grundwerkzeugs zu kombinieren. Mit der Erfindung wird deshalb auch ein Baukastensystem vorgeschlagen, wonach das Drehwerkzeug über einen Drehwerkzeugaufsatz und ein Grundwerkzeug verfügt, wobei das Grundwerkzeug einen Grundkörper und eine Platte aufweist, wobei hinsichtlich des Bohrsystems unterschiedlich ausgebildete Platten vorgesehen sind, die wahlweise mit einem Grundkörper zur Ausbildung des Grundwerkzeugs kombinierbar sind.

Gemäß einem weiteren Merkmal der Erfindung ist vorgesehen, dass die Platte mit dem Grundkörper verschraubt ist. Es ist so eine positionssichere Anordnung der Platte am Grundkörper erreicht. Zudem ist eine Abdichtung des Bohrsystems zwischen Platte und Grundkörper sichergestellt, wie dies im Nachfolgenden noch näher beschrieben ist.

Gemäß einem weiteren Merkmal der Erfindung ist vorgesehen, dass der Grundkörper plattenseitig eine Ausnehmung aufweist, in die im endmontierten Zustand ein korrespondierend zur Ausnehmung ausgebildeter Fortsatz der Platte eingreift.

Der Grundkörper verfügt über eine Ausnehmung, vorzugsweise um eine Ausnehmung, die im Querschnitt kreisförmig ausgebildet ist. Die Ausnehmung kann beispielsweise nach Art einer Sacklochbohrung ausgebildet sein.

Zur Ausnehmung des Grundkörpers korrespondierend ausgebildet ist ein Fortsatz vorgesehen, der von der Platte bereitgestellt ist. Bevorzugterweise sind der Fortsatz und die Platte einstückig ausgebildet.

Im endmontierten Zustand des Grundwerkzeugs greifen der Grundkörper und die Platte formschlüssig ineinander. Dies ist dadurch erreicht, das im endmontierten Zustand der plattenseitige Fortsatz von der grundkörperseitigen Ausnehmung aufgenommen ist. Es ist so insgesamt eine exakte Ausrichtung und positionssichere Anordnung von Platte einerseits und Grundkörper andererseits sichergestellt.

Gemäß einem weiteren Merkmal der Erfindung ist vorgesehen, dass das Bohrungssystem - kurz auch Bohrsystem genannt - eine erste, grundkörperseitige Zentralbohrung und eine zweite, plattenseitige Zentralbohrung aufweist, wobei die beiden Zentralbohrungen im endmontierten Zustand unter Zwischenordnung einer Ringdichtung fluchtend angeordnet sind. Dabei stellt die fluchtende Anordnung der beiden Zentralbohrungen sicher, dass ein Hilfsstoff von der grundkörperseitigen Zentralbohrung in die plattenseitige Zentralbohrung übergeben werden kann.

Zwecks Abdichtung der Zentralbohrungen im Bereich der Trennstelle bzw. Schnittstelle zwischen Grundkörper und Platte ist eine Ringdichtung vorgesehen, beispielsweise in der Ausgestaltung eines O-Rings. Diese Ringdichtung sorgt im endmontierten Zustand hinsichtlich des Bohrungssystems für eine Abdichtung der Platte gegenüber dem Grundkörper.

Gemäß einem weiteren Merkmal der Erfindung ist vorgesehen, dass die Ringdichtung von einem vom Grundkörper bereitgestellten Dichtungssitz aufgenommen ist. Dieser Dichtungssitz kann beispielsweise nach Art einer Sacklochbohrung ausgebildet sein, mithin als kreisförmige Ausnehmung ausgebildet sein, in die die Ringdichtung im endmontierten Zustand eingesetzt ist.

Im endmontierten Zustand liegt der plattenseitige Fortsatz unter Zwischenordnung der Ringdichtung am Grundkörper an. Dabei sind die geometrischen Abmessungen von Dichtungssitz, Ringdichtung und Plattenfortsatz derart aufeinander abgestimmt, dass die Ringdichtung im endmontierten Zustand zwischen Platte und Grundkörper druckbelastet angeordnet ist.

Gemäß einem weiteren Merkmal der Erfindung ist in diesem Zusammenhang vorgesehen, dass die Ringdichtung im endmontierten Zustand am Fortsatz der Platte anliegt und die Platte gegenüber dem Grundkörper abdichtet.

Gemäß einem weiteren Merkmal der Erfindung ist vorgesehen, dass das Bohrungssystem eine plattenseitige Querbohrung aufweist, die mit der plattenseitigen Zentralbohrung zusammenwirkt.

Es ist mithin eine plattenseitige Querbohrung vorgesehen, die an die plattenseitige Zentralbohrung strömungstechnisch angeschlossen ist. In die plattenseitige Zentralbohrung eingeleiteter Hilfsstoff kann mithin in die Querbohrung überführt werden. Von dort aus gelangt der Hilfsstoff dann weiter zum Austrittselement.

Gemäß einem weiteren Merkmal der Erfindung ist vorgesehen, dass das Bohrungssystem eine plattenseitige Längsbohrung aufweist, die mit der plattenseitigen Querbohrung zusammenwirkt. Dabei ist je Drehwerkzeugaufsatz, der an der Platte angeordnet werden kann, eine Längsbohrung vorgesehen. Im bestimmungsgemäßen Verwendungsfall strömt der Hilfsstoff mithin durch die plattenseitige Zentralbohrung, von dort aus in die plattenseitige Querbohrung und alsdann in die plattenseitige Längsbohrung zum zugeordneten Drehwerkzeugaufsatz.

Gemäß einem weiteren Merkmal der Erfindung ist vorgesehen, dass die plattenseitige Längsbohrung querbohrungsentfernt in eine Nut mündet. Diese Nut dient als Reservoir für Hilfsstoff und gewährleistet im bestimmungsgemäßen Verwendungsfall einen unterbrechungsfreien Zulauf von Hilfsstoff zum werkzeugaufsatzseitigen Austrittselement.

Gemäß einem weiteren Merkmal der Erfindung ist vorgesehen, dass der Werkzeugaufsatz plattenseitig eine Nut aufweist. Diese Nut dient im Unterschied zur plattenseitigen Nut nicht als Reservoir, sondern sie sorgt bei gleichzeitiger Verstellmöglichkeit des Drehwerkzeugaufsatzes in Relation zur Platte für einen strömungstechnischen Anschluss an das plattenseitige Bohrungssystem. Im endmontierten Zustand liegen die plattenseitige Nut und die drehwerkzeugaufsatzseitige Nut übereinander, wodurch eine strömungstechnische Verbindung hergestellt ist. Dabei ist die drehwerkzeugaufsatzseitige Nut in Nutlängsrichtung länger ausgebildet als die plattenseitige Nut. Dies gestattet eine Verstellung des Drehwerkzeugaufsatzes in Relation zur Platte, und zwar in Nutlängsrichtung. Dabei ist aufgrund dieser Nut-Ausgestaltung eine strömungstechnische Verbindung zwischen den Nuten auch dann ausgebildet, wenn der Drehwerkzeugaufsatz zwecks Positionseinstellung in Relation zur Platte bewegt wird. Mittels der erfindungsgemäßen Nut-Ausgestaltung wird mithin ein auch über die Trennstelle zwischen Drehwerkzeugaufsatz und Platte reichendes Bohrungssystem bereitgestellt, mittels welchem in schon vorbeschriebener Weise im Bedarfsfall Hilfsstoff zum Austrittselement geführt werden kann.

Zwischen dem Drehwerkzeugaufsatz und der Platte ist keine im Besonderen ausgebildete Dichtung vorgesehen. Zwecks positionssicherer Anordnung des Werkzeugaufsatzes an der Platte ist eine Verzahnung vorgesehen, die metallisch abdichtet. Damit ist zwar keine 100%ige Abdichtung im Bereich der Trennstelle zwischen Werkzeugaufsatz und Platte gegeben, doch dies ist auch gar nicht erwünscht, so dass im bestimmungsgemäßen Betriebsfall auch eine Schmierung der Verzahnung gegeben ist, was eine Verstellung des Drehwerkzeugaufsatzes in Relation zur Platte vereinfacht, eine Montage bzw. Demontage des Drehwerkzeugaufsatzes begünstigt und im Übrigen ein ungewolltes Anbacken des Drehwerkzeugaufsatzes an der Platte vermeidet.

Gemäß einem weiteren Merkmal der Erfindung ist vorgesehen, dass das Bohrungssystem eine vom Drehwerkzeugaufsatz bereitgestellte Bohrung aufweist, die sich an die drehwerkzeugaufsatzseitige Nut anschließt. Der Hilfsstoff gelangt mithin nach einer Übertragung in die drehwerkzeugaufsatzseitige Nut in die sich daran anschließende Bohrung. Diese Bohrung mündet schlussendlich in das Austrittselement ein.

Gemäß einem weiteren Merkmal der Erfindung ist vorgesehen, dass das Austrittselement einen Ringkanal bereitstellt. In diesen Ringkanal des Austrittselements mündet die Bohrung des Drehwerkzeugaufsatzes ein. Im bestimmungsgemäßen Verwendungsfall wird mithin der Ringkanal des Austrittselements mit Hilfsstoff geflutet.

Gemäß einem weiteren Merkmal der Erfindung ist vorgesehen, dass das Austrittselement eine mit dem Ringkanal in strömungstechnischer Verbindung stehende Austrittsöffnung aufweist. Durch diese Austrittsöffnung kann mithin im bestimmungsgemäßen Verwendungsfall Hilfsstoff gezielt abgegeben werden, insbesondere auf die vom Drehwerkzeugaufsatz getragene Schneidplatte.

Gemäß einem weiteren Merkmal der Erfindung ist vorgesehen, dass das Austrittselement nach Art einer Scheibe ausgebildet ist. Drehwerkzeugaufsatzseitig trägt diese Scheibe die schon vorbeschriebene Ringnut.

Das Austrittselement ist gemäß einem weiteren Merkmal der Erfindung am Drehwerkzeug verschraubt angeordnet. Dabei dient die zur Anordnung des Austrittselements am Drehwerkzeug vorgesehene Schraube zugleich als Drehachse, um die herum bei gelöster Schraube das Austrittselement verdreht werden kann. Es ist so eine wunschgemäße Ausrichtung der vom Austrittselement bereitgestellten Austrittsöffnung ermöglicht. Nach einem manuellen Lösen der Schraube kann das Austrittselement hinsichtlich seiner Austrittsöffnung mithin wahlweise und gezielt ausgerichtet werden. Dies erbringt in vorteilhafter Weise die Möglichkeit, den austrittsöffnungsseitig im bestimmungsgemäßen Verwendungsfall abgegebenen Strahl an Hilfsmittel bzw. Hilfsstoff ausrichten zu können.

Nachfolgend wird ein Ausführungsbeispiel der Erfindung anhand der Zeichnung näher erläutert. Es zeigen:
- Fig. 1: den Aufbau eines mehrteiligen Drehwerkzeuges mit einem Drehwerkzeugaufsatz und mit einem Ausgleichsgewicht in Seitenansicht;
- Fig. 2: den Aufbau eines mehrteiligen Drehwerkzeuges mit zwei Drehwerkzeugaufsätzen in Draufsicht;
- Fig. 3: Beispiele für Profile, die mit dem Drehwerkzeug zu fertigen sind;
- Fig. 4: in schematisch perspektivischer Ansicht ein erfindungsgemäßes Drehwerkzeug;
- Fig. 5: in schematisch perspektivischer Ansicht ausschnittsweise einen Drehwerkzeugaufsatz des erfindungsgemäßen Drehwerkzeuges gemäß Ausschnitt G nach Fig. 4;
- Fig. 6: in schematischer Seitenansicht das erfindungsgemäße Drehwerkzeug nach Fig. 4;
- Fig. 7: in schematischer Schnittdarstellung das erfindungsgemäße Drehwerkzeug gemäß Schnittlinie A-A gemäß Fig. 6;
- Fig. 8: in schematischer Schnittdarstellung das erfindungsgemäße Drehwerkzeug gemäß Schnittlinie E-E gemäß Fig. 6;
- Fig. 9: in schematischer Schnittdarstellung das erfindungsgemäße Drehwerkzeug gemäß Schnittlinie D-D gemäß Fig. 6 und
- Fig. 10: in schematischer Schnittdarstellung das erfindungsgemäße Drehwerkzeug gemäß Schnittlinie F-F gemäß Fig. 6.

Das in der Zeichnung dargestellte Drehwerkzeug ist für eine Werkzeugmaschine zur spanenden Innen- und Außenbearbeitung von unrunden Profilen konzipiert. Dieses Drehwerkzeug weist ein Grundwerkzeug 3 auf, das bezogen auf eine Werkzeugrotationsachse 5 an einem stirnseitigen Endabschnitt eine Werkzeugschnittstelle 9 zur Aufnahme in eine Werkzeugspindel einer Werkzeugmaschine (nicht dargestellt) und am anderen stirnseitigen Endabschnitt eine Trennstelle 6 zu mindestens einem am Grundwerkzeug 3 befestigbaren Drehwerkzeugaufsatz 2 aufweist. Der mindestens eine Drehwerkzeugaufsatz 2 ist bezogen auf die Werkzeugrotationsachse 5 auf dem Grundwerkzeug 3 radial verlagerbar und feststellbar und weist einen Abschnitt zur Aufnahme einer Wendeschneidplatte 12 auf. Weiterhin ist auf dem mindestens einen Drehwerkzeugaufsatz 2 benachbart zur Aufnahme für die Wendeschneidplatte 12 ein Austrittselement 1 für einen Betriebshilfsstoff angeordnet.

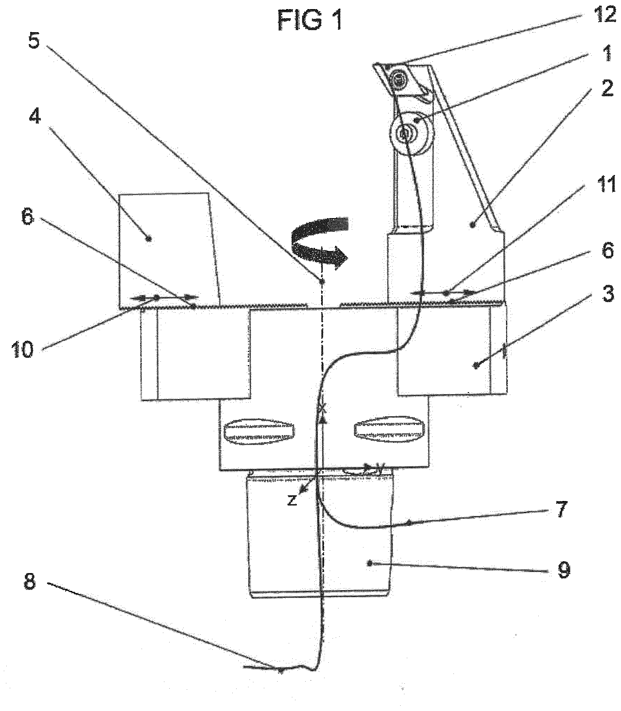

Konventionelle Drehwerkzeuge werden in einem Bearbeitungsprozess benutzt, der ein feststehendes und nicht rotierendes Werkzeug verwendet. Das hier beschriebene Werkzeug kann zur Herstellung unrunder Profile verwendet werden und rotiert dabei um seine eigene Werkzeugrotationsachse 5 in relativem Bezug zum Werkstück. Dabei kann der Drehsinn des Werkzeuges gleichsinnig oder gegensinnig zum Drehsinn des Werkstückes sein. Das Drehwerkzeug ist mehrteilig aufgebaut und besteht aus einem Grundwerkzeug 3 mit Werkzeugschnittstelle 9, einer Trennstelle 6 zwischen Drehwerkzeugaufsatz 2 und Grundwerkzeug 3, einem oder gegebenenfalls mehreren Drehwerkzeugaufsätzen 2 und gegebenenfalls einem Ausgleichsgewicht 4. Sowohl das Ausgleichsgewicht 4 als auch der Drehwerkzeugaufsatz 2 können in radialer Richtung 10 bzw. 11 auf dem Grundwerkzeug 3 verstellt und wieder befestigt werden. Die für die Bearbeitung benötigten Hilfsstoffe zum Kühlen und/oder Schmieren werden durch ein Bohrungssystem durch das Grundwerkzeug 3 über die Trennstelle 6 durch den Drehwerkzeugaufsatz 2 durch eine am Austrittselement 1 befindliche Öffnung direkt auf die Wendeschneidplatte 12 und damit an den Ort der Spanbildung bei Kontakt mit dem Werkstück geleitet. Die Zuführung der Hilfsstoffe in das Grundwerkzeug erfolgt zentrisch 8 bzw. auf der Mantelfläche 7 der Werkzeugschnittstelle 9, wie in Fig. 1 dargestellt.

Das vorliegende Drehwerkzeug ist mehrteilig ausgeführt, so dass ein Grundwerkzeug 3 mit einer Werkzeugschnittstelle 9 und grundsätzlich ein oder mehrere Drehwerkzeugaufsätze 2 in Kombination mit einem Ausgleichsgewicht 4 für die wirkenden Unwuchtkräfte eingesetzt werden können. Das Ausgleichsgewicht 4 kann je nach auftretender Unwucht in seiner Verstellrichtung 10 verschoben werden. Die hierbei auftretenden Unwuchtkräfte wirken auf das Werkzeug, weil es prozessbedingt in Rotation um seine Werkzeugrotationsachse 5 bezüglich des Werkstückes versetzt wird.

Das in Fig. 1 dargestellte Drehwerkzeug stellt ein Grundwerkzeug 3 dar, welches mit einem Drehwerkzeugaufsatz 2 und einem Ausgleichsgewicht 4 ausgestattet ist. Das Ausgleichsgewicht 4 dient der Kompensation auftretender Unwuchtkräfte durch Rotation des Grundwerkzeuges 3 mit verbundenem Drehwerkzeugaufsatz 2. Auf dem Drehwerkzeugaufsatz 2 ist ein Austrittselement 1 befestigt, welches eine Öffnung aufweist zum gerichteten Austritt des Betriebshilfsstoffes, hier auf die Wendeschneidplatte 12.

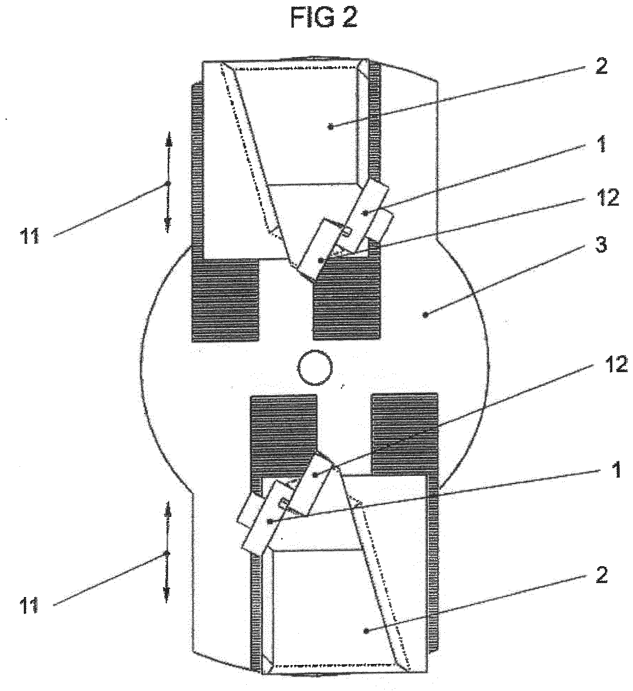

Das in Fig. 2 dargestellte Drehwerkzeug stellt ein Grundwerkzeug 3 dar, welches mit zwei Drehwerkzeugaufsätzen 2 ausgestattet ist. Die durch Rotation des Grundwerkzeuges 3 mit verbundenen Drehwerkzeugaufsätzen 2 auftretenden Unwuchtkräfte werden konstruktiv durch eine gewichtsoptimale Gestaltung der Drehwerkzeugaufsätze 2 kompensiert. Diese Ausgestaltung ist vorteilhaft zur Fertigung von unrunden Profilen mit ungerader Eckenzahl geeignet, da hierbei zwei unterschiedliche Drehwerkzeugaufsätze 2 für unterschiedliche geometrische Maße 180° versetzt zum Einsatz kommen können.

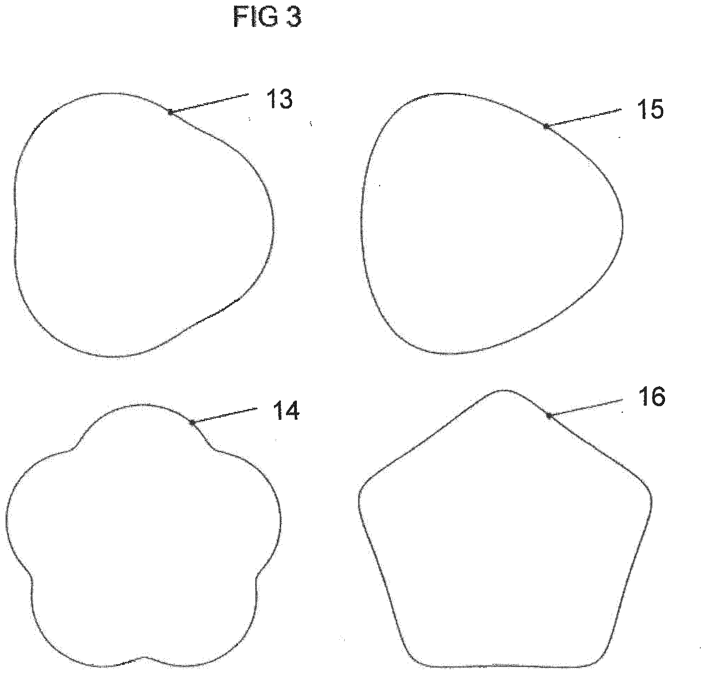

In Fig. 3 sind beispielhaft Profile dargestellt, die mit einem erfindungsgemäß ausgeführten Drehwerkzeug hergestellt werden können. So können bei einer gleichsinnigen Drehrichtung zwischen Werkzeug und Werkstück hypotrochoidale Profile 15 bzw. 16 und bei einer gegensinnigen Drehrichtung epitrochoidale Profile 13 bzw. 14 hergestellt werden. Das Drehzahlverhältnis bestimmt hierbei die resultierende Eckenzahl.

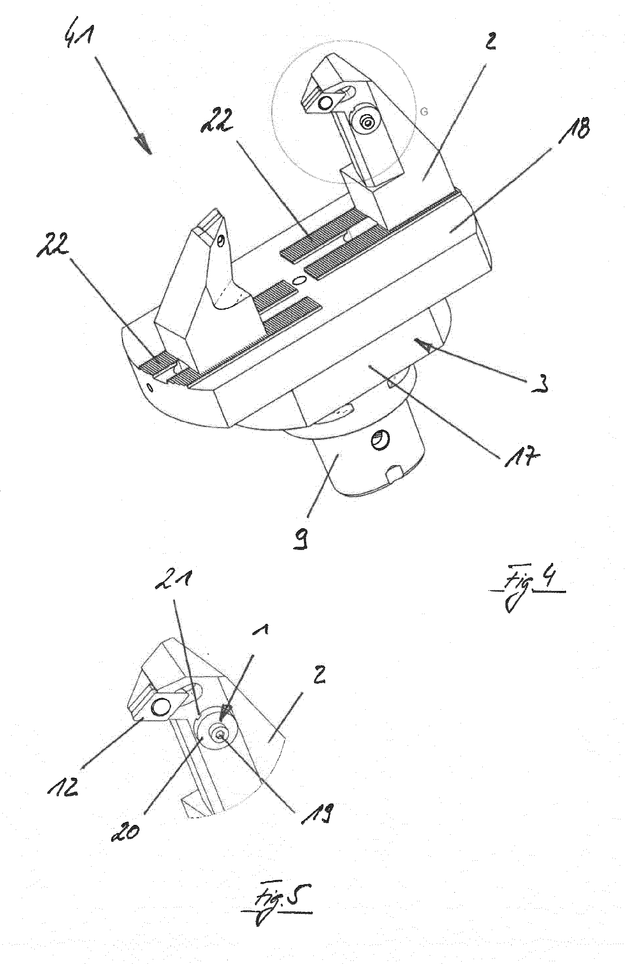

Fig. 4 lässt das erfindungsgemäße Drehwerkzeug 41 in schematisch perspektivischer Ansicht erkennen.

Wie sich aus der Darstellung nach Fig. 4 ergibt, verfügt das erfindungsgemäße Drehwerkzeug 41 über ein Grundwerkzeug 3, das einen Drehwerkzeugaufsatz 2 trägt. Es können, wie in Fig. 4 dargestellt, auch zwei Drehwerkzeugaufsätze 2 vorgesehen sein bzw. ein Drehwerkzeugaufsatz 2 in Kombination mit einem Ausgleichsgewicht 4, wie vorstehend bereits erläutert.

Zur positionssicheren Anordnung des Drehwerkzeugaufsatzes 2 am Grundwerkzeug 3 verfügt das Grundwerkzeug 3 drehwerkzeugaufsatzseitig über eine Zahnung 22. Eine hierzu korrespondierend ausgebildete Zahnung ist am Drehwerkzeugaufsatz 2 grundwerkzeugseitig ausgebildet, so dass im endmontierten Zustand eine Verzahnung zwischen dem Drehwerkzeugaufsatz 2 einerseits und dem Grundwerkzeug 3 andererseits gegeben ist.

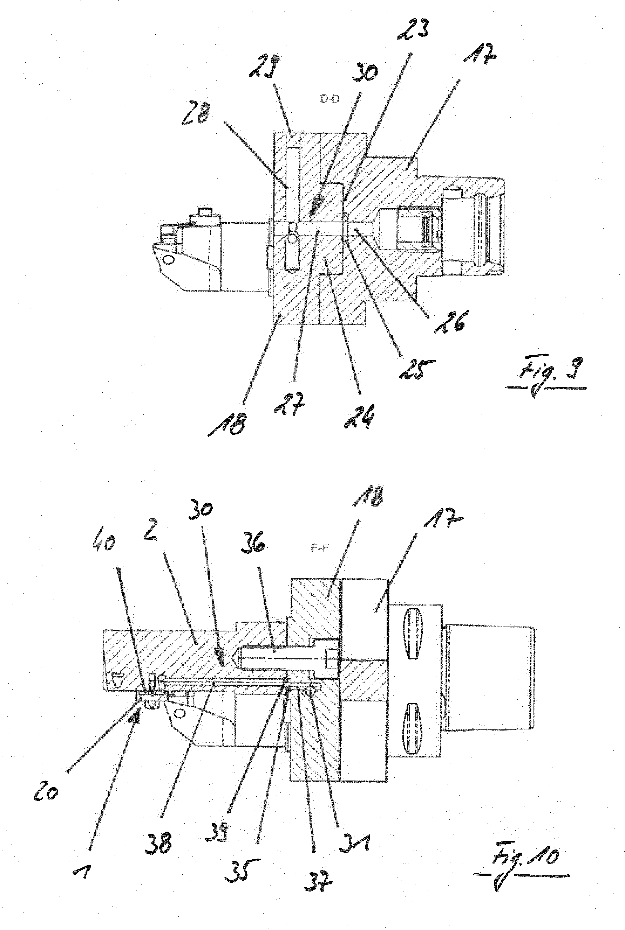

Im endmontierten Zustand ist der Drehwerkzeugaufsatz 2 mit dem Grundwerkzeug 3 verschraubt, wie dies insbesondere die Schnittdarstellung nach Fig. 10 erkennen lässt. Die zwecks Verschraubung von Drehwerkzeugaufsatz 2 und Grundwerkzeug 3 vorgesehene Schraube trägt hier das Bezugszeichen 36.

Die Verzahnung zwischen Drehwerkzeugaufsatz 2 und Grundwerkzeug 3 ermöglicht eine formschlüssige und im verschraubten Zustand auch kraftschlüssige Verbindung. Zugleich gestattet es die Verzahnung, den Drehwerkzeugaufsatz 2 in radialer Richtung der Werkzeugrotationsachse 5 wahlweise zu positionieren. Zudem ist insbesondere eine Feinabstimmung in tangentialer Richtung mit Bezug auf die Werkzeugrotationsachse 5 ermöglicht, indem eine Verschiebung des Drehwerkzeugaufsatzes 2 in Relation zum Grundwerkzeug 3 in Zahnflankenrichtung erfolgt.

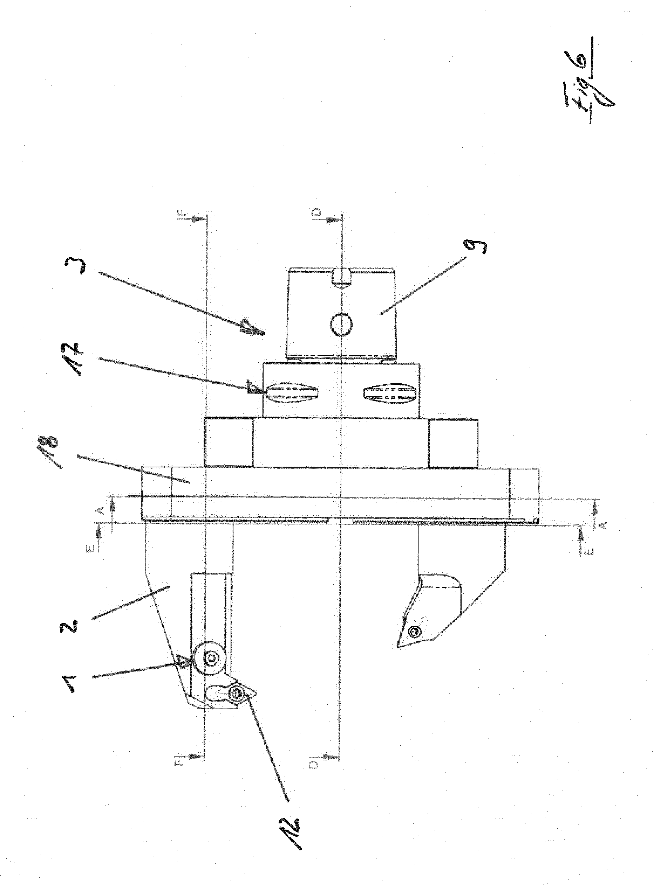

Wie eine Zusammenschau insbesondere der Figuren 4 und 6 erkennen lässt, weist das Grundwerkzeug 3 einen Grundkörper 17 sowie eine Platte 18 auf. Dabei stellt der Grundkörper 17 die schon vorerläuterte Werkzeugschnittstelle 9 und die Platte 18 die Zahnung 22 bereit.

Wie sich aus Fig. 5 ergibt, trägt der Drehwerkzeugaufsatz 2 im Bereich seines der Werkzeugschnittstelle 9 gegenüberliegenden Endabschnitts eine Wendeschneidplatte 12. Benachbart zu dieser Wendeschneidplatte 12 trägt der Drehwerkzeugaufsatz 2 das Austrittselement 1, aus dem im bestimmungsgemäßen Verwendungsfall ein Hilfsstoff austritt. Zu diesem Zweck verfügt das Austrittselement 1 über eine Öffnung 21. Diese ist im gezeigten Ausführungsbeispiel nach Fig. 5 in Richtung auf die Wendeschneidplatte 12 ausgerichtet, so dass ein vom Austrittselement 1 abgegebener Hilfsstoff auf die Wendeschneidplatte 12, insbesondere auf die von der Wendeschneidplatte 12 bereitgestellte Schneidkante trifft.

Im gezeigten Ausführungsbeispiel ist das Austrittselement 1 nach Art einer Scheibe 20 ausgebildet, die einen kreisförmigen Querschnitt aufweist, wie sich insbesondere aus der Darstellung nach Fig. 5 ergibt. Die Scheibe 20 ist mittels einer Schraube 19 am Drehwerkzeugaufsatz 2 angeordnet. Bei zumindest teilweise gelöster Schraube 19 ist die Scheibe 20 um eine von der Schraube 19 gebildete Drehachse herum verschwenkbar ausgebildet, was es gestattet, die Scheibe 20 und insbesondere die davon bereitgestellte Austrittsöffnung 21 zu justieren und positionsgenau auf die Wendeschneidplatte 12 auszurichten.

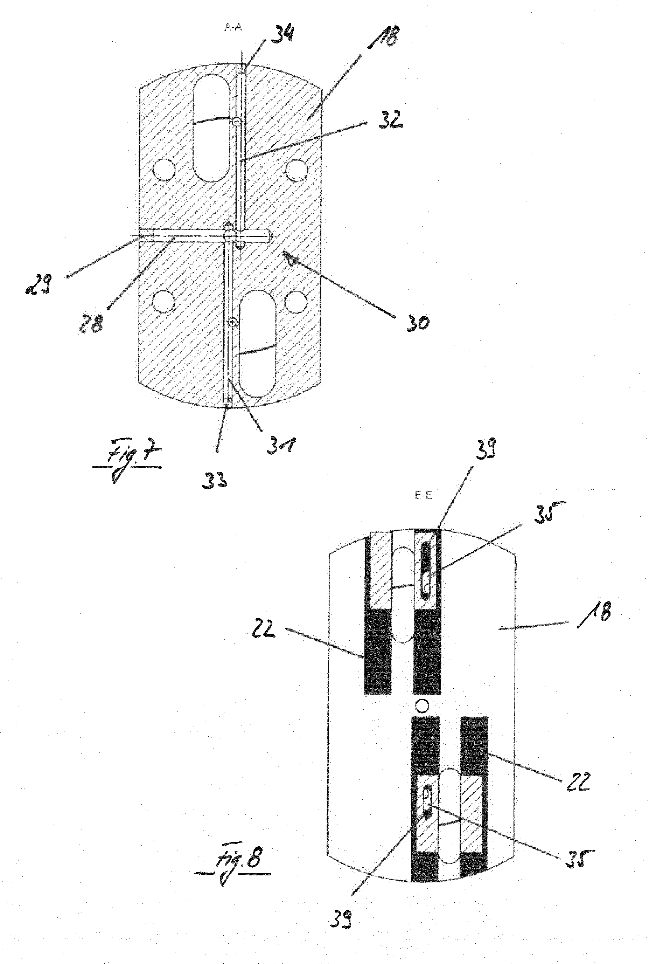

Das erfindungsgemäße Drehwerkzeug 41 verfügt zur Versorgung des Austrittselements 1 bzw. der davon bereitgestellten Öffnung 21 mit einem Hilfsstoff über ein Bohrungssystem 30, wie sich dieses insbesondere aus einer Zusammenschau der Fign. 7 bis 10 im Einzelnen ergibt.

Die Darstellung nach Fig. 9 lässt zunächst einmal erkennen, dass das Grundwerkzeug 3 einen Grundkörper 17 sowie eine Platte 18 aufweist, die im endmontierten Zustand formschlüssig ineinandergreifen. Der Grundkörper 17 weist zu diesem Zweck plattenseitig eine Ausnehmung 23 auf. Die Platte 18 verfügt ihrerseits über einen korrespondierend zur Ausnehmung 23 ausgebildeten Fortsatz 24. Im endmontierten Zustand greift dieser Fortsatz 24 in die Ausnehmung 23 des Grundkörpers 17 ein, wie sich dies aus der Darstellung nach Fig. 9 ergibt.

Zur Abdichtung der Platte 18 gegenüber dem Grundkörper 17 ist eine Ringdichtung 25 vorgesehen. Diese Ringdichtung 25 ist am Boden der Ausnehmung 23 des Grundkörpers 17 angeordnet. Im endmontierten Zustand liegt die Ringdichtung 25 stirnseitig des Fortsatzes 24 an der Platte 18 an. Dabei sind der Fortsatz 24, die Ausnehmung 23 und der die Ringdichtung 25 aufnehmende Dichtungssitz in ihren geometrischen Ausgestaltungen derart aufeinander abgestimmt, dass der Fortsatz 24 im endmontierten Zustand unter Druck an der Ringdichtung 25 anliegt.

Das Bohrsystem 30 stellt grundwerkzeugseitig eine Zentralbohrung bereit, wobei sich diese Zentralbohrung unterteilt in eine grundkörperseitige Zentralbohrung 26 einerseits und plattenseitige Zentralbohrung 27 andererseits. Dabei durchgreift die Zentralbohrung die Ringdichtung 25, womit das Bohrungssystem 30 auch im Bereich der Trennstelle zwischen Platte 18 und Grundkörper 17 abgedichtet ist.

Wie sich insbesondere aus einer Zusammenschau der Fign. 7 bis 9 ergibt, verfügt das Bohrungssystem 30 über eine plattenseitige Querbohrung 28. Diese steht in strömungstechnischer Verbindung mit der plattenseitigen Zentralbohrung 27, so dass ein der Zentralbohrung im bestimmungsgemäßen Verwendungsfall aufgegebener Hilfsstoff nach einem Passieren der plattenseitigen Zentralbohrung 27 in die Querbohrung 28 überführt wird. Für einen fluiddichten Verschluss der Querbohrung 28 sorgt ein Stopfen 29.

Die Platte 18 verfügt des Weiteren über zwei Längsbohrungen 31 und 32, die in strömungstechnischer Verbindung mit der Querbohrung 28 stehen, wie dies insbesondere die Darstellung nach Fig. 7 erkennen lässt. Dabei sind die Längsbohrungen 31 und 32 jeweils im Bereich ihres der Querbohrung 28 gegenüberliegenden Endabschnitts mit einem Stopfen 33 bzw. 34 fluiddicht verschlossen.

Die Längsbohrungen 31 und 32 führen jeweils zu den plattenseitig bereitgestellten Zahnungen 22, das heißt jeweils in den Bereich der Platte 18, in welchen im endmontierten Zustand die vom Grundwerkzeug 3 getragenen Drehwerkzeugaufsätze 2 angeordnet sind.

Eine jede Längsbohrung 31 bzw. 32 mündet in eine Nut 35 ein, wie sich aus Fig. 8 ergibt. Dabei dienen die Nuten 25 als Reservoir für geförderten Hilfsstoff, so dass eine hilfsstoffunterbrechungsfreie Versorgung eines Austrittselements 1 gewährleistet ist.

Für den strömungstechnischen Anschluss einer Nut 35 an eine Längsbohrung 31 bzw. 32 ist eine Verbindungsbohrung 37 vorgesehen, wie sich dies insbesondere aus der Darstellung nach Fig. 10 ergibt.

Aus Fig. 10 lässt sich gleichfalls entnehmen, dass ein Drehwerkzeugaufsatz 2 mit einer Bohrung 38 ausgerüstet ist. Grundwerkzeugseitig mündet die Bohrung 38 in eine Nut 39. Anderendseitig mündet die Bohrung 38 in den von einem Austrittselement 1 bereitgestellten Ringkanal 40. Dabei ist der Ringkanal 40 seinerseits strömungstechnisch an die vom Austrittselement 1 bereitgestellte Öffnung 21 angeschlossen.

Die je Drehwerkzeugaufsatz 2 vorgesehene Nut 39 ermöglicht es, den Drehwerkzeugaufsatz 2 in radialer Richtung in Relation zum Grundwerkzeug 3 ausrichten zu können, wie sich dies insbesondere aus der Darstellung nach Fig. 8 ergibt. Denn die Ausgestaltung der Nut 39 sorgt dafür, dass im Überdeckungsbereich einer jeweiligen Nut 39 mit einer jeweils zugehörigen Nut 35 eine strömungstechnische Verbindung ausgebildet ist. Dabei ermöglicht es die Längenausgestaltung einer Nut 39 in Nutlängsrichtung, einen Werkzeugaufsatz 2 entsprechend weit in Relation zum Grundwerkzeug 3 ausrichten zu können.

### Bezugszeichenliste

- 1: Austrittselement mit verstellbarer Öffnung für Hilfsstoff
- 2: Drehwerkzeugaufsatz
- 3: Grundwerkzeug
- 4: Ausgleichsgewicht
- 5: Werkzeugrotationsachse
- 6: Trennstelle zwischen Grundwerkzeug und Drehwerkzeugaufsatz
- 7: seitliche Zuführung Hilfsstoff
- 8: zentrische Zuführung Hilfsstoff
- 9: Werkzeugschnittstelle
- 10: Verstellrichtung Ausgleichsgewicht
- 11: Verstellrichtung Drehwerkzeugaufsatz
- 12: Wendeschneidplatte
- 13: epitrochoidales Profil
- 14: epitrochoidales Profil
- 15: hypotrochoidales Profil
- 16: hypotrochoidales Profil
- 17: Grundkörper
- 18: Platte
- 19: Schraube
- 20: Scheibe
- 21: Öffnung
- 22: Bohrung
- 23: Ausnehmung
- 24: Fortsatz
- 25: Ringdichtung
- 26: grundkörperseitige Zentralbohrung
- 27: plattenseitige Zentralbohrung
- 28: Querbohrung
- 29: Stopfen
- 30: Bohrungssystem
- 31: Längsbohrung
- 32: Längsbohrung
- 33: Stopfen
- 34: Stopfen
- 35: Nut
- 36: Schraube
- 37: Verbindungbohrung
- 38: Bohrung
- 39: Nut
- 40: Ringkanal
- 41: Drehwerkzeug

## Patentansprüche

1. Drehwerkzeug für eine Werkzeugmaschine zur spanenden Innen- und Außenbearbeitung von unrunden Profilen, wobei das Drehwerkzeug ein Grundwerkzeug (3) aufweist, das bezogen auf eine Werkzeugrotationsachse (5) an einem stirnseitigen Endabschnitt eine Werkzeugschnittstelle (9) zur Aufnahme in eine Werkzeugspindel einer Werkzeugmaschine und am anderen stirnseitigen Endabschnitt eine Trennstelle (6) zu mindestens einem am Grundwerkzeug (3) befestigbaren Drehwerkzeugaufsatz (2) aufweist, wobei der mindestens eine Drehwerkzeugaufsatz (2) bezogen auf die Werkzeugrotationsachse (5) auf dem Grundwerkzeug (3) radial verlagerbar und feststellbar ist und einen Abschnitt zur Aufnahme einer Wendeschneidplatte (12) aufweist, **dadurch gekennzeichnet, dass** auf dem mindestens einen Drehwerkzeugaufsatz (2) benachbart zur Aufnahme für die Wendeschneidplatte (12) ein Austrittselement (1) für einen Betriebshilfsstoff angeordnet ist und dass das Drehwerkzeug ein Bohrungssystem aufweist, das ausgestaltet ist, um den für den Bearbeitungsprozess notwendigen Betriebshilfsstoff als gasförmiges Medium oder als Emulsion zu einer am Austrittselement (1) ausgebildeten Öffnung zum Austritt des Betriebshilfsstoffes zu leiten, wobei das Bohrungssystem ausgehend vom Übergangsbereich der Werkzeugschnittstelle (9) zum Grundwerkzeug (3) bis zum Übergangsbereich des Grundwerkzeuges (3) zur Trennstelle (6) im Grundwerkzeug (3) und ausgehend von der Trennstelle (6) zum Austrittselement (1) im Drehwerkzeugaufsatz (2) verläuft und wobei der Betriebshilfsstoff über eine in Richtung der Werkzeugrotationsachse (5) in der Werkzeugschnittstelle (9) angeordnete Bohrung zentrisch (8) und/oder über die Mantelfläche (7) der Werkzeugschnittstelle (9) in das Bohrungssystem zuführbar ist.

2. Drehwerkzeug nach Anspruch 1, **dadurch gekennzeichnet, dass** das Austrittselement (1) am Drehwerkzeugaufsatz (2) derart verstellbar angeordnet ist, dass die am Austrittselement (1) ausgebildete Öffnung zum Austritt des Betriebshilfsstoffes auf den Werkzeugeingriffspunkt an der Schneidenspitze der Wendeschneidplatte (12) ausrichtbar ist.

3. Drehwerkzeug nach Anspruch 1, **dadurch gekennzeichnet, dass** das Bohrungssystem an der Trennstelle (6) zwischen dem Grundwerkzeug (3) und dem Drehwerkzeugaufsatz (2) derart ausgestaltet ist, dass auch bei einer radialen Verlagerung des Drehwerkzeugaufsatzes (2) auf dem Grundwerkzeug (3) der Betriebshilfsstoff abgedichtet geführt ist.

4. Drehwerkzeug nach Anspruch 3, **dadurch gekennzeichnet, dass** das Bohrungssystem an der Trennstelle (6) im Grundwerkzeug (3) als eine Nut ausgeführt ist.

5. Drehwerkzeug nach Anspruch 1, **dadurch gekennzeichnet, dass** die Arretierung des Drehwerkzeugaufsatzes (2) auf dem Grundwerkzeug (3) als eine selbsthemmende Verbindung ausgestaltet ist.

6. Drehwerkzeug nach Anspruch 5, **dadurch gekennzeichnet, dass** die selbsthemmende Verbindung zur Arretierung des Drehwerkzeugaufsatzes (2) auf dem Grundwerkzeug (3) als eine Schraubenverbindung ausgeführt ist.

7. Drehwerkzeug nach Anspruch 1, **dadurch gekennzeichnet, dass** am Grundwerkzeug (3) gegenüberliegend vom Drehwerkzeugaufsatz (2) ein Ausgleichsgewicht (4) zur Kompensation der Unwucht angeordnet ist.

8. Drehwerkzeug nach Anspruch 7, **dadurch gekennzeichnet, dass** das Ausgleichsgewicht (4) bezogen auf die Werkzeugrotationsachse (5) auf dem Grundwerkzeug in radialer Richtung (10) verlagerbar ist.

9. Drehwerkzeug nach Anspruch 1, **dadurch gekennzeichnet, dass** am Grundwerkzeug (3) mindestens zwei Drehwerkzeugaufsätze (2) angeordnet sind.

10. Drehwerkzeug nach Anspruch 9, **dadurch gekennzeichnet, dass** die durch mehrere Drehwerkzeugaufsätze (2) auftretenden Unwuchtkräfte durch eine gewichtsoptimale Gestaltung dieser Drehwerkzeugaufsätze (2) kompensierbar sind.
